# FASCICULE DE BREVET EUROPEEN

(11) **EP 0 730 102 B1**
(45) Date de publication et mention de la délivrance du brevet: **12.04.2000**
(21) Numéro de dépôt: 96410014.3
(22) Date de dépôt: 27.02.1996
(51) Int. Cl.: F16B 45/02

(54) **Mousqueton à bague de verrouillage**
Karabinerhaken mit einem Verriegelungsring
Snap hook with a locking ring

(30) Priorité: 02.03.1995 FR 9502658
(43) Date de publication de la demande: 04.09.1996
(73) Titulaire: ZEDEL, F-38920 Crolles (FR)
(72) Inventeur: Maurice, Alain, 38610 Gieres (FR); Petzl, Paul, 38530 Barraux (FR)
(74) Mandataire: Hecké, Gérard

(56) Documents cités:
- WO-A-93/25822
- CH-A- 604 755
- DE-U- 9 110 358
- FR-A- 2 146 703
- GB-A- 2 077 838

## Description

L'invention est relative à un mousqueton, notamment pour l'escalade, selon le préambule de la revendication 1.

Des mousquetons connus font usage d'une bague de verrouilage rotative, maintenue dans la position de blocage par la force élastique du ressort de rappel. Pour ouvrir le mousqueton par pivotement du doigt vers l'intérieur du corps, il est nécessaire de tourner au préalable la bague vers la position de déblocage. La course angulaire de la bague entre les deux positions de blocage et de déblocage est relativement importante, notamment de l'ordre de 90°, ce qui complique la manipulation avec le pouce et l'index d'une seule main. Un autre inconvénient concerne la sécurité qui n'est pas totale, car une friction importante de la corde peut déverrouiller intempestivement la bague, et provoquer l'ouverture non désirée du doigt.

Pour améliorer la sécurité, un autre mousqueton comme connu e.g. par CH-A-604755, qui correspond au mousqueton selon la préambule de la revendication 1, propose de renforcer le mouvement de déverrouillage de la bague, en combinant un premier déplacement en translation avec un deuxième déplacement en rotation vers la position de déblocage. La bague reste toutefois soumise à des forces élastiques, ce qui n'exclut pas une ouverture intempestive du doigt en présence d'une friction très importante de la corde. La manipulation d'un tel mousqueton avec une seule main est d'autre part difficile.

Il existe un troisième type de mousqueton avec une bague de verrouillage manuel à baïonnette, laquelle est bistable, c'est à dire qu'elle ne revient pas automatiquement en position de blocage lors de la refermeture du doigt. La sécurité n'est pas assurée si l'utilisateur oublie de verrouiller manuellement la bague.

L'objet de l'invention consiste à faciliter la manipulation d'un mousqueton à bague de verrouillage automatique, tout en renforcant la sécurité de l'utilisateur.

Le mousqueton selon l'invention est caractérisé en ce que le doigt comporte de plus un verrou coopérant en position active avec la bague pour la verrouiller positivement c'est-à-dire indépendamment de tout effort s'exerçant sur le doigt ou la bague, dans la première position de blocage, et des moyens de commande pour actionner le verrou vers une position inactive autorisant la rotation de la bague vers la deuxième position de déblocage.

L'effet de friction de la corde sur la bague rotative est inefficace, étant donné que le verrou assure un verrouillage positif de la bague dans la position de blocage. La sécurité est totale, car le doigt reste fermé aussi longtemps que le verrou n'est pas acrionné manuellement vers la position inactive. La présence du verrou permet de diminuer la course angulaire de la bague pour la libération du doigt, ce qui facilite la manipulation avec deux doigts.

Selon un mode de réalisation préférentiel, le verrou est équipé d'un téton télescopique monté dans un orifice du doigt et associé à un troisième ressort de rappel du téton vers la position active. Le téton comporte une surface de butée sensiblement arrondie, notamment en forme de bille, coopérant avec la paroi cylindrique interne de la bague de verrouillage pour maintenir le verrou en position inactive pendant le déplacement en rotation de la bague, et pour constituer le verrouillage positif dans la position active du verrou lorsque la surface de butée s'engage dans la première position de blocage à l'intérieur d'un trou radial de la bague .

Selon un autre mode de réalisation, le verrou comporte un levier d'accrochage monté à pivotement sur un axe du doigt , ledit levier ayant une extension radiale faisant saillie d'une ouverture de la bague de verrouillage pour actionner le verrou entre les positions active et inactive.

Selon une caractéristique de l'invention, la bague de verrouillage comporte une ouverture conformée selon une boutonnière curviligne pour le logement d'un bossage, ladite boutonnière étant agencée pour déterminer la course angulaire de la bague entre la première position de blocage, et la deuxième position de déblocage, et pour positionner axialement la bague par rapport au doigt

La bague de verrouillage est avantageusement dotée d'une paire de surfaces de préhension en formes de cuvettes diamétralement opposées, pour faciliter le déverrouillage du verrou et la rotation de la bague vers la deuxième position de déblocage, ledit trou étant situé dans la partie médiane de l'une des cuvettes .

D'autres avantages et caractéristiques de l'invention ressortiront plus clairement de la description qui va suivre, donnée uniquement à titre d'exemple non limitatif, et représentée aux dessins annexés dans lesquels:
- la figure 1 est une vue en élévation du mousqueton selon l'invention, le doigt étant fermé et verrouillé par la bague;
- la figure 2 montre une vue identique à la figure 1, avec le doigt en position ouvert déverrouillé;
- la figure 3 représente une vue en coupe axiale du doigt de la figure 1;
- les figures 4 à 6 sont des vues en coupe respectivement selon les lignes 4-4, 5-5, et 6-6 de la figure 3;
- les figures 7 et 8 montrent des vues de profil de la figure 1, respectivement en position de blocage, et en position de déblocage de la bague de verrouillage;
- la figure 9 est une vue identique à la figure 3 d'une variante de réalisation.

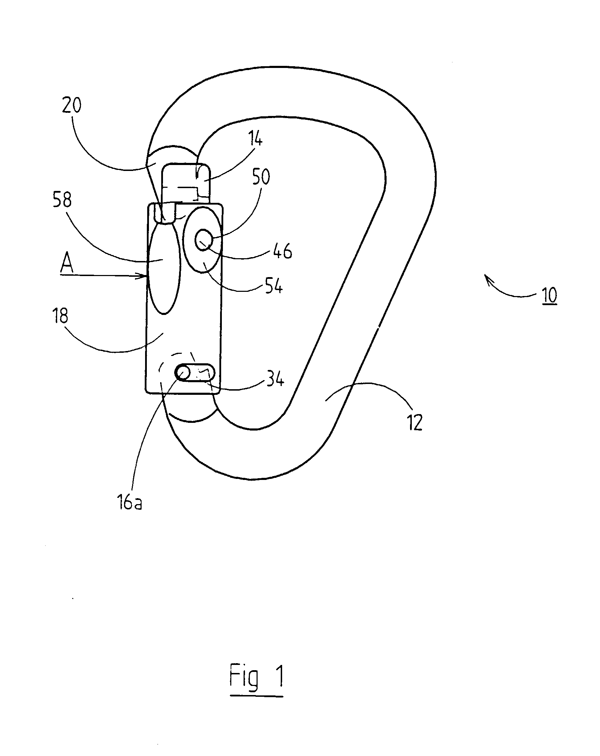

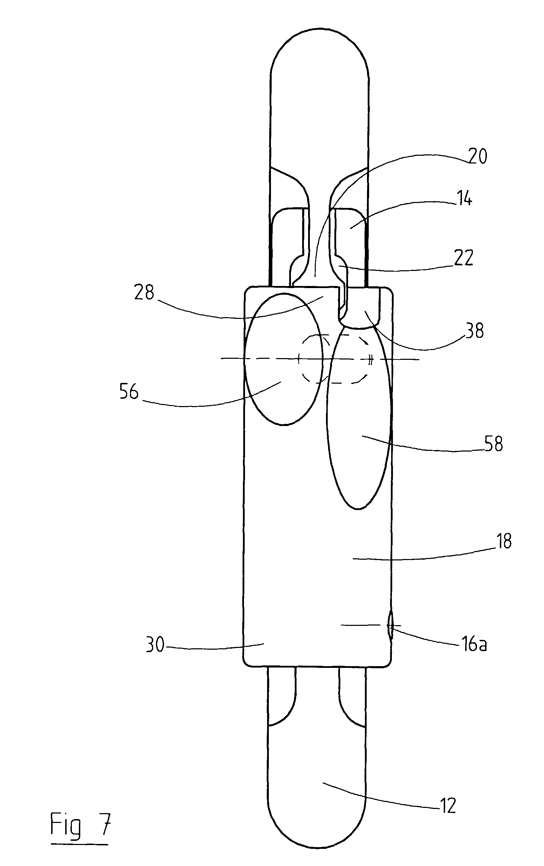

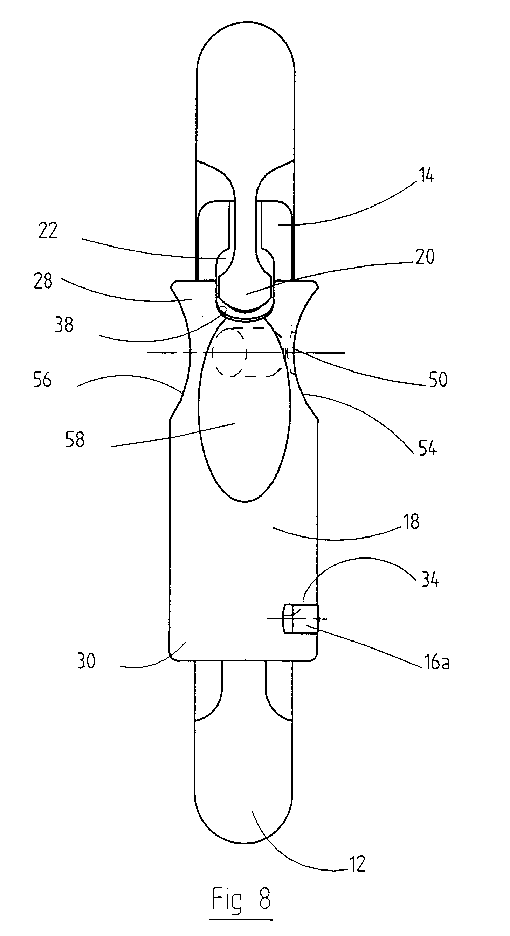

Sur les figures 1 à 8, un mousqueton 10 pour l'escalade comporte un corps 12 métallique en forme de C, et un doigt 14 mobile monté à pivotement sur un axe 16 situé à l'extrémité inférieure du corps 12. Le doigt 14 métallique possède une section cylindrique, et est équipé d'une bague de verrouillage 18 coaxiale, montée avec un léger jeu radial en rotation limitée autour du doigt 14 entre une première position de blocage (figure 7), et une deuxième position de déblocage (figure 8).

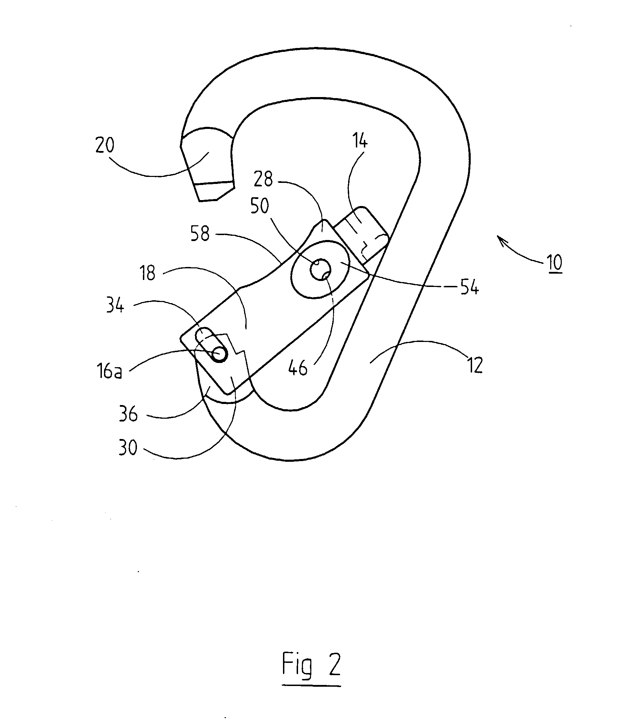

Dans la position de déblocage de la bague 18, le doigt 14 est déplaçable vers l'intérieur du corps 12, autorisant l'ouverture du mousqueton (figure 2) pour permettre soit l'introduction d'une corde ou d'une sangle, soit l'accrochage du mousqueton à un organe d'amarrage (non représenté).

L'extrémité supérieure du corps 12 est pourvue d'un élément mâle 20 apte à s'engager dans un élément femelle 22 du doigt 14 lors de son retour vers la position de fermeture (figure 1) sous l'action d'un premier ressort de rappel 24. L'élément mâle 20 présente une structure de T renversé comportant une languette prolongée par une protubérance en forme de chape. L'élément femelle 22 du doigt 14 est situé à l'opposé de l'axe 16 de pivotement, et comprend un évidement de forme conjuguée à l'élément mâle 20. La longueur de la bague de verrouillage 18 est inférieure à celle du doigt 14, et les extrémités de la bague 18 se trouvent respectivement au niveau de l'élément mâle 20 , et en saillie de l'axe de pivotement 16.

Dans la position de fermeture du doigt 14, un deuxième ressort de rappel 26 sollicite la bague de verrouillage 18 vers la première position de blocage (figure 7). La partie supérieure de la bague 18 se trouve en regard de la protubérance de l'élément mâle 20, ce qui empêche tout pivotement du doigt 14 vers l'intérieur lors d'une action de poussée s'exerçant perpendiculairement par rapport à la direction longitudinale de la bague 18 (voir flèche A, figure 1).

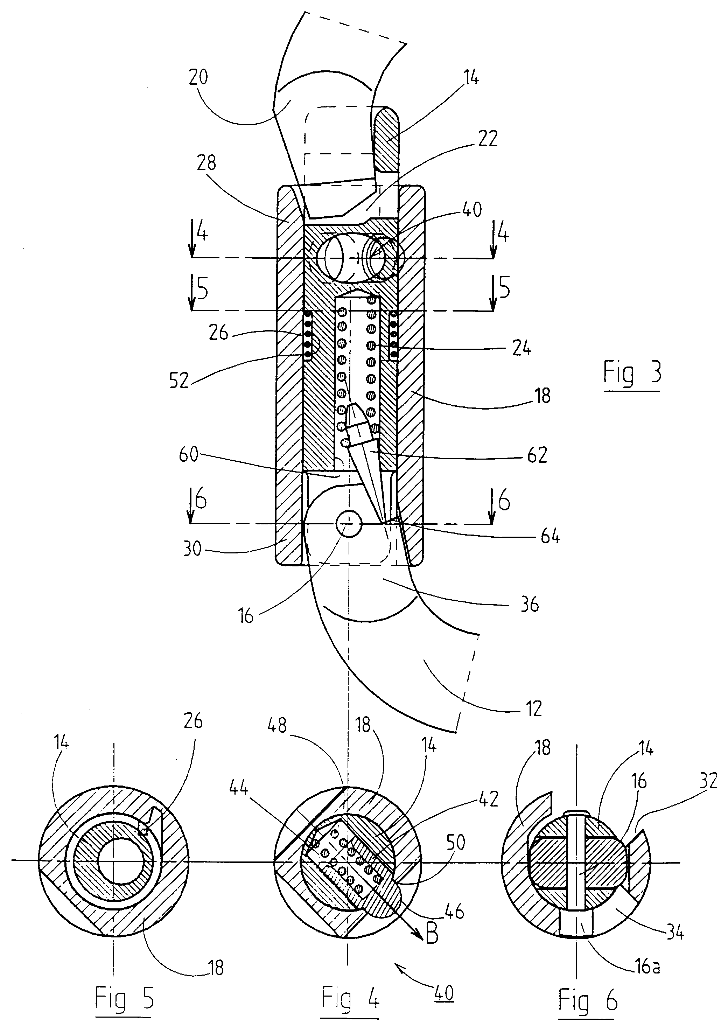

Sur la figure 6, la partie inférieure 30 annulaire de la bague de verrouillage 18 est dotée d'une saignée 32 ayant la forme d'un encoche semi-ouverte en U, et d'une ouverture 34 agencée selon une boutonnière curviligne pour le logement d'un bossage 16a situé dans le prolongement de l'axe 16. La saignée 32 et l'ouverture 34 sont décalées angulairement par rapport à la direction longitudinale du doigt 14. La longueur de l'ouverture 34 curviligne détermine avec précision la course angulaire de la bague de verrouillage 18 lors de sa rotation limitée entre la première position de blocage, et la deuxième position de déblocage. La course angulaire de la bague 18 correspond environ à 45°.

La présence de l'extension 16a de l'axe 16 dans l'ouverture 34 procure en plus de sa fonction de butée angulaire, une deuxième fonction de positionnement axial de la bague 18 par rapport à la direction longitudinale du doigt 14. Les extrémités opposées semi-arrondies de la boutonnière 34 constituent les moyens de butées en rotation, tandis que les arêtes parallèles coopèrent avec l'extension 16a pour former les moyens de butées en translation.

La fonction de la saignée 32 sert de moyen de mémoire pour maintenir la bague de verrouillage 18 dans la deuxième position de déblocage, aussi longtemps que le doigt 14 est ouvert. L'une des arêtes de la saignée 32 reste en permanence en contact avec une face d'appui 36 de l'extrémité inférieure du corps 12, et empêche tout mouvement de retour de la bague 18 vers la première position de blocage.

Le bord supérieur de la bague de verrouillage 18 comporte une fente 38 autorisant le passage de la protubérance de l'élément mâle 20 lorsque la bague 14 se trouve dans la deuxième position de déblocage (figure 8). L'ouverture du doigt 14 est alors possible par une action de poussée faisant pivoter le doigt 14 et la bague 18 autour de l'axe 16.

Le doigt 14 mobile est équipé en plus d'un verrou 40 susceptible de verrouiller positivement la bague 18 dans la première position de blocage. Selon le mode de réalisation de la figure 4, le verrou 40 comporte un téton 42 télescopique monté dans un orifice 44 radial du doigt 14, et pourvu d'une surface de butée 46 arrondie, notamment en forme de bille. Le téton 42 est associé à un troisième ressort 48 de rappel logé dans l'orifice 44, et sollicitant la surface de butée 46 vers l'extérieur, dans le sens de la flèche B. Le troisième ressort 48 est avantageusement formé par un ressort à compression.

La bague de verrouillage 18 est munie d'un trou 50 circulaire autorisant dans la première position de blocage, la venue en saillie de la surface de butée 46 du téton 42. Dans cette position de verrouillage positif illustré à la figure 4, tout mouvement de rotation de la bague 18 vers la deuxième position de déblocage est rendu impossible, et le doigt 14 reste fermé avec une sécurité totale, indépendamment de tout effort s'exerçant sur le doigt 14.

Le deuxième ressort 26 de rappel de la bague 18 vers la position de blocage, est constitué par un ressort à torsion, agencé dans une gorge 52 annulaire située dans la partie médiane du doigt 14. L'un des brins du deuxième ressort 26 est engagé dans une échancrure ménagée dans la paroi interne de la bague 18 cylindrique, permettant une précompression du ressort 26 avant l'insertion de la bague 18 sur le doigt 14. La présence du ressort 26 dans la gorge 52 permet de maintenir le jeu radial entre le doigt 14 et la bague 18 rotative à une valeur minimum.

L'actionnement de la bague de verrouillage 18 pour son déplacement de la première position de blocage vers la deuxième position de déblocage, est facilité grâce à une paire de surfaces de préhension 54,56 conformées selon des cuvettes diamétralement opposées, au niveau de la partie supérieure de la bague 18. Le trou 50 de passage du téton 42 est situé au fond de la surface de préhension 54, ce qui facilite l'action de déverrouillage du verrou 40.

Entre les deux surfaces de préhension 54,56 de la bague 18 se trouve un évidement 58 légèrement concave pour agrandir l'entrée du mousqueton lorsque le doigt 14 est ouvert (figure 2). Le premier ressort 24 hélicoïdal s'étend dans un alésage 60 borgne et excentré du doigt 14. La base du ressort 24 est associée à une queue 62 prenant appui sur un rebord 64 de la face 36 du corps 12, le rebord 64 étant situé entre l'axe 16 et la partie inférieure 30 de la bague 18. La flexion du ressort 24 lors de l'ouverture du doigt 14 tend à le ramener automatiquement en position fermée dès que l'utilisateur le relâche.

Le fonctionnement du mousqueton 10 à bague de verrouillage 18 peut être résumé de la manière suivante:

Dans la position fermée (figure 1 et 7), le verrou 40 est en position active, et maintient la bague de verrouillage 18 dans la première position de blocage. La partie supérieure 28 de la bague 18 constitue un moyen d'arrêt qui empêche tout mouvement de pivotement du doigt 14 vers l'intérieur du corps 12. Le troisième ressort 48 garde la surface de butée 46 du verrou 40 dans le trou 50 de la bague 18 pour l'immobiliser en rotation.

L'ouverture du doigt 14 mobile nécessite un déverrouillage préalable du verrou 40 par une action de poussée de l'index sur la bille du téton 42 à l'encontre de la force du troisième ressort 48. Avec l'aide du pouce et de l'index, il suffit ensuite de tourner la bague 18 dans le sens des aiguilles des montres pour l'amener dans la deuxième position de déblocage (figure 8), autorisant ensuite le pivotement du doigt 14 vers l'intérieur (figure 2). La bague 18 maintient le verrou 40 en position inactive dès le début de la course angulaire. L'effet mémoire résultant de la coopération de la saignée 32 avec la face d'appui 36 lorsque le doigt 14 est ouvert, empêche tout retour de la bague 18 rotative vers la première position, de blocage. La bague 18 reste débloquée jusqu'à la refermeture du doigt 14 sous l'action de rappel du premier ressort 24.

En fin de course de fermeture du doigt 14, l'effet mémoire disparaît, et le deuxième ressort 26 ramène la bague 18 de verrouillage vers la première position de blocage, dans laquelle le verrou 40 redevient actif dès que la surface de butée 46 du téton télescopique fait saillie du trou 50 sous l'action du troisième ressort 48.

La présence du verrou 40 permet de diminuer la course angulaire de la bague 18 rotative pour libérer le doigt 14. Les opérations de déverrouillage et de rotation de la bague 18, ainsi que le pivotement du doigt 14 mobile pour l'ouverture du mousqueton s'effectuent très facilement avec le pouce et l'index d'une seule main.

Le prémontage de l'ensemble doigt 14, bague de verrouillage 18, verrou 40, queue 62, et ressorts 24,26,48 s'effectue avant la mise en place finale de l'axe 16 de pivotement.

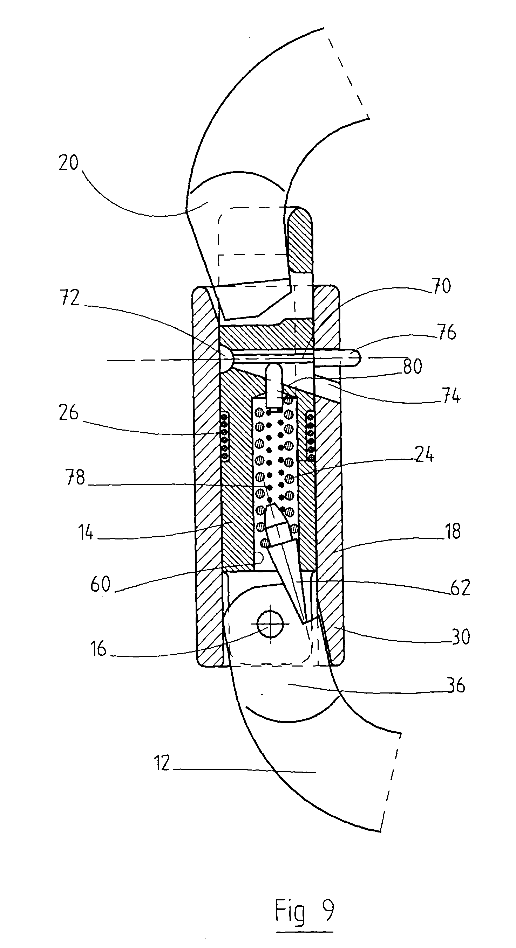

En référence à la variante de la figure 9, les mêmes numéros de repères seront utilisés pour désigner des pièces identiques à celles des figures 1-8. Le verrou comporte un levier d'accrochage monté à pivotement sur un axe 72 du doigt 14. La bague de verrouillage 18 est dotée d'une ouverture 74 à travers laquelle fait saillie une extension 76 radiale du levier 70. Un ressort de polarisation 78 est disposé coaxialement à l'intérieur du premier ressort 24, et agit perpendiculairement sur la partie intermédiaire du levier 70 d'accrochage en le sollicitant vers la position active. Le passage de la position active (figure 9) vers la position inactive (non représentée) s'effectue par abaissement de l'extension 76, entraînant la venue du levier 70 contre une rampe 80 inclinée.

Dans la position abaissée du levier 70, il est possible de tourner la bague 18 vers la deuxième position de déblocage, autorisant le pivotement du doigt 14 autour de son axe 16.

Il est clair que le verrou 40 peut être réalisé différemment sans sortir du cadre de l'invention.

La bague de verrouillage 18 peut être en matériau métallique ou plastique.

## Revendications

1. Mousqueton, notamment pour l'escalade, comprenant un corps (12) métallique en forme de C, ayant une première extrémité dotée d'un élément de retenue mâle (20), et une deuxième extrémité d'articulation d'un doigt (14) mobile autour d'un axe de pivotement (16) entre une position fermée et une position ouverte, ledit doigt (14) comportant:
- un élément de retenue femelle (22) agencé à l'opposé de l'axe de pivotement (16) pour coopérer avec l'élément de retenue mâle (20) dans la position fermée,
- un premier ressort (24) de rappel du doigt (14) vers la position fermée,
- une bague de verrouillage (18) montée à rotation limitée coaxialement autour du doigt (14) entre une première position de blocage, et une deuxième position de déblocage, ladite bague (18) comprenant des moyens de mémoire pour la maintenir dans la deuxième position de déblocage aussi longtemps que le doigt (14) est ouvert,
- et un deuxième ressort (26) de rappel de la bague de verrouillage (18) vers la première position de blocage lorsque le doigt (14) est fermé,
caractérisé en ce que le doigt (14) comporte de plus un verrou (40) coopérant en position active avec la bague (18) pour la verrouiller positivement, c'est-à-dire indépendamment de tout effort s'exerçant sur le doigt ou la bague, dans la première position de blocage, et des moyens de commande pour actionner le verrou (40) vers une position inactive autorisant la rotation de la bague (18) vers la deuxième position de déblocage.

2. Mousqueton selon la revendication 1, caractérisé en ce que le verrou (40) est équipé d'un téton (42) télescopique monté dans un orifice (44) du doigt (14), et associé à un troisième ressort (48) de rappel du téton (42) vers la position active.

3. Mousqueton selon la revendication 2, caractérisé en ce que le téton (42) comporte une surface de butée 46 sensiblement arrondie, notamment en forme de bille, coopérant avec la paroi cylindrique interne de la bague de verrouillage 18 pour maintenir le verrou (40) en position inactive pendant le déplacement en rotation de la bague (18), et pour constituer le verrouillage positif dans la position active du verrou (40) lorsque la surface de butée (46) s'engage dans la première position de blocage à l'intérieur d'un trou (50) radial de la bague (18).

4. Mousqueton selon la revendication 1, caractérisé en ce que le verrou (40) comporte un levier d'accrochage (70) monté à pivotement sur un axe (72) du doigt (14), ledit levier ayant une extension (76) radiale faisant saillie d'une ouverture (74) de la bague de verrouillage (18) pour actionner le verrou entre les positions active et inactive.

5. Mousqueton selon la revendication 4, caractérisé en ce que le levier d'accrochage (70) est associé à un ressort de polarisation (78) disposé coaxialement à l'intérieur du premier ressort (24), la ligne d'action dudit ressort de polarisation étant sensiblement perpendiculaire à la partie intermédiaire du levier (70) en le sollicitant vers la position active.

6. Mousqueton selon l'une des revendications 1 à 5, caractérisé en ce que la bague de verrouillage (18) comporte une ouverture (34) conformée selon une boutonnière curviligne pour le logement d'un bossage (16a), ladite boutonnière étant agencée pour déterminer la course angulaire de la bague (18) entre la première position de blocage, et la deuxième position de déblocage, et pour positionner axialement la bague (18) par rapport au doigt (14).

7. Mousqueton selon l'une des revendications 1 à 6, caractérisé en ce que le deuxième ressort (26) de rappel de la bague (18) est formé par un ressort de torsion agencé dans une gorge (52) annulaire du doigt (14), l'un des brins dudit ressort étant engagé dans une échancrure ménagée dans la paroi interne de la bague (18) cylindrique pour autoriser une précompression avant l'insertion de la bague (18) sur le doigt (14).

8. Mousqueton selon la revendication 3, caractérisé en ce que la bague de verrouillage (18) est dotée d'une paire de surfaces de préhension (54,56) en formes de cuvettes diamétralement opposées, pour faciliter le déverrouillage du verrou (40) et la rotation de la bague vers la deuxième position de déblocage, ledit trou (50) étant situé dans la partie médiane de l'une des cuvettes (54).

9. Mousqueton selon l'une des revendications 1 à 8, caractérisé en ce que la bague de verrouillage (18) est réalisée en un matériau métallique ou plastique.

10. Mousqueton selon la revendication 8, caractérisé en ce que la bague de verrouillage (18) est équipée d'un évidement (58) légèrement concave, agencé entre les deux surfaces de préhension (54,56) pour agrandir l'orifice d'entrée du mousqueton lorsque le doigt est ouvert.

## Patentansprüche

1. Karabiner, insbesondere zum Klettern, mit einem metallenen, C-förmigen Körper (12), der ein erstes Ende aufweist, das mit einem Rückhalte-Einsteckelement (20) versehen ist, und ein zweites Ende, an das ein Finger (14) angelenkt ist, der um eine Schwenkachse (16) zwischen einer geschlossenen und einer offenen Position beweglich ist, welcher Finger (14) umfasst:
- ein Aufnahmeelement (22), das entgegegengesetzt zur Schwenkachse (16) angeordnet ist, um in geschlossener Position mit dem Einsteckelement (20) zusammenzuwirken,
- eine erste Feder (24) zum Zurückholen des Fingers (14) in die geschlossene Position,
- einen Verriegelungsring (18), der mit begrenzter Drehung koaxial um den Finger (14) herum montiert ist, und zwar zwischen einer ersten Blockierungsposition und einer zweiten Entriegelungsposition, welcher Ring (18) Speicherungsvorrichtungen umfasst, um ihn so lange in der zweiten Entriegelungsposition zu halten, bis der Finger (14) offen ist,
- und eine zweite Feder (26) zum Zurückholen des Verriegelungsrings (18) in seine erste Blockierungsposition, wenn der Finger (14) geschlossen ist, dadurch gekennzeichnet, dass :
der Finger (14) ferner einen Riegel (40) umfasst, der in aktiver Position mit dem Ring (18) zusammenwirkt, um ihn wirksam, d.h. unabhängig von jeder Kraft, die auf den Finger oder den Ring ausgeübt wird, in der ersten Blockierungsposition zu verriegeln, sowie Betätigungsvorrichtungen, um den Riegel (40) in Richtung auf eine inaktive Position zu bewegen, die das Drehen des Rings (18) in seine zweite Entriegelungsposition erlaubt

2. Karabiner nach Anspruch 1, dadurch gekennzeichnet, dass der Riegel (40) mit einem Teleskopzapfen (42) ausgestattet ist, der in einer Öffnung (44) des Fingers (14) montiert und mit einer dritten Feder (48) zum Rückholen des Zapfens (42) in die aktive Position verbunden ist.

3. Karabiner nach Anspruch 2, dadurch gekennzeichnet, dass der Zapfen (42) eine im wesentlichen runde Anschlagfläche (46) umfasst, insbesondere in Form einer Kugel, die mit der zylindrischen Innenwand des Verriegelungsrings (18) zusammenwirkt, um den Riegel (40) während der Drehbewegung des Rings (18) in inaktiver Position zu halten und die wirksame Verriegelung in der aktiven Position des Riegels (40) zu bilden, wenn die Anschlagfläche (46) in der ersten Blockierungsposition in eine Radialöffnung (50) des Rings (18) hineinreicht.

4. Karabiner nach Anspruch 1, dadurch gekennzeichnet, dass der Riegel (40) einen Befestigungshebel (70) umfasst, der schwenkbar um eine Achse (72) des Fingers (14) montiert ist, welcher Hebel eine radiale Verlängerung (76) aufweist, die durch eine Öffnung (76) des Verriegelungsrings (18) heraussteht, um den Riegel zwischen aktiver und inaktiver Position zu betätigen.

5. Karabiner nach Anspruch 4, dadurch gekennzeichnet, dass der Befestigungshebel (70) mit einer Polarisationsfeder (78) verunden ist, die koaxial in der ersten Feder (24) angeordnet ist, wobei die Wirkungslinie der Polarisationsfeder im wesentlichen quer zum mittleren Bereich des Befestigungshebels (70) wirkt, indem sie ihn in Richtung auf seine aktive Position zieht.

6. Karabiner nach einem der Ansprüche 1 bis 5, dadurch gekennzeichnet, dass der Verriegelungsring (18) eine Öffnung (34) umfasst, die entsprechend einer länglichen, gekrümmten Aussparung geformt ist, zur Aufnahme eines Vorsprungs (16a), welche Aussparung so vorgesehen ist, dass sie den Winkelhub des Rings (18) zwischen der ersten Blockierungsposition und der zweiten Entriegelungsposition bestimmt und den Ring (18) bezüglich dem Finger (14) axial positioniert.

7. Karabiner nach einem der Ansprüche 1 bis 6, dadurch gekennzeichnet, dass die zweite Feder (26) zum Zurückholen des Rings (18) aus einer Torsionsfeder besteht, die in einer ringförmigen Vertiefung (52) des Fingers (14) angeordnet ist, wobei einer der Teile der zweiten Feder (26) in einen bogenförmigen Ausschnitt in der Innenwand des zylindrischen Rings (18) geführt ist, um eine Vorspannung vor dem Einführen des Rings (18) über den Finger (14) zu erlauben.

8. Karabiner nach Anspruch 3, dadurch gekennzeichnet, dass der Verriegelungsring (18) vorteilhafterweise mit einem Paar Greifflächen (54, 56) in Form von diametral entgegengesetzten Schalen versehen ist, um das Entriegeln des Riegels (40) und das Drehen des Rings in die zweite Blockierungsposition zu erleichtern, welche Öffnung (50) sich im mittleren Bereich einer der Schalen (54) befindet.

9. Karabiner nach einem der Ansprüche 1 bis 8, dadurch gekennzeichnet, dass der Verriegelungsring (18) entweder aus einem metallenen Material oder aus Kunststoff besteht.

10. Karabiner nach Anspruch 8, dadurch gekennzeichnet, dass der Ring (18) mit einer leicht konkaven Aussparung (58) versehen ist, die zwischen den beiden Greifflächen (54, 56) angeordnet ist, um die Eingangsöffnung des Karabiners zu vergrößern, wenn der Finger offen ist.

## Claims

1. A snap-hook, notably for mountain climbing, comprising a C-shaped metallic body (12), having a first end provided with a male securing part (20), and a second end for articulation of a mobile finger (14) around a pivoting spindle (16) between a closed position and an open position, said finger (14) comprising :
- a female securing part (22) arranged opposite the pivoting spindle (16) to cooperate with the male securing part (20) in the closed position,
- a first return spring (24) to return the finger (14) to the closed position,
- a locking ring (18) mounted with limited rotation coaxially around the finger (14) between a first locking position and a second unlocking position, said ring (18) comprising memory means to keep it in the second unlocking position so long as the finger (14) is open,
- and a second return spring (26) to return the locking ring (18) to the first locking position when the finger (14) is closed,
characterized in that the finger (14) comprises in addition a locking bolt (40) cooperating in the active position with the ring (18) to lock the latter positively in the first locking position, in other words independently of any force acting on the finger or the ring, and operating means to actuate the locking bolt (40) to an inactive position allowing rotation of the ring (18) to the second unlocking position.

2. The snap-hook according to claim 1, characterized in that the locking bolt (40) is equipped with a telescopic pin (42) fitted in an orifice (44) of the finger (14), and associated to a third return spring (48) to return the pin (42) to the active position.

3. The snap-hook according to claim 2, characterized in that the pin (42) comprises an appreciably rounded stopping surface (46), notably in the shape of a ball, cooperating with the internal cylindrical wall of the locking ring (18) to keep the locking bolt (40) in the inactive position during the rotational movement of the ring (18), and to constitute the positive locking in the active position of the locking bolt (40) when the stopping surface (46) engages in the first locking position inside a radial hole (50) of the ring (18).

4. The snap-hook according to claim 1, characterized in that the locking bolt (40) comprises a latching lever (70) pivotally mounted on a spindle (72) of the finger (14), said lever having a radial extension (76) protruding out from an opening (74) of the locking ring (18) to actuate the locking bolt between the active and inactive positions.

5. The snap-hook according to claim 4, characterized in that the latching lever (70) is associated to a polarization spring (78) arranged coaxially inside the first spring (24), the line of action of said polarization spring being appreciably perpendicular to the intermediate part of the lever (70) urging the latter to the active position.

6. The snap-hook according to claim 1, characterized in that the locking ring (18) comprises an opening (34) shaped as a curved button-hole for housing a boss (16a), said button-hole being arranged to determine the angular travel of the ring (18) between the first locking position and the second unlocking position, and to position the ring (18) axially with respect to the finger (14).

7. The snap-hook according to claim 1, characterized in that the second return spring (26) of the ring (18) is formed by a torsion spring arranged in an annular groove (52) of the finger (14), one of the strands of said spring being engaged in an indentation arranged in the internal wall of the cylindrical ring (18) to enable precompression before the ring (18) is inserted on the finger (14).

8. The snap-hook according to claim 3, characterized in that the locking ring (18) is provided with a pair of gripping surfaces (54, 56) in the form of diametrically opposite dishes, to facilitate unlocking of the locking bolt (40) and rotation of the ring to the second unlocking position, said hole (50) being located in the middle part of one of the dishes (54).

9. The snap-hook according to claim 1, characterized in that the locking ring (18) is made of metallic or plastic material.

10. The snap-hook according to claim 8, characterized in that the locking ring (18) is equipped with a slightly concave recess (58) arranged between the two gripping surfaces (54, 56) to enlarge the inlet orifice of the snap-hook when the finger is open.
